# EUROPEAN PATENT SPECIFICATION

(11) **EP 1 969 450 B1**
(45) Date of publication and mention of the grant of the patent: **30.05.2018**
(21) Application number: 06823983.9
(22) Date of filing: 07.12.2006
(51) Int. Cl.: G06F 3/0481, G06F 3/0482, G06F 3/0486, G06F 3/0488

(54) **MOBILE DEVICE AND OPERATION METHOD CONTROL AVAILABLE FOR USING TOUCH AND DRAG**
MOBILES GERÄT UND FÜR DIE VERWENDUNG VON TOUCH UND DRAG VERFÜGBARE BETRIEBSVERFAHRENSSTEUERUNG
DISPOSITIF MOBILE ET COMMANDE DE FONCTIONNEMENT ADAPTEE A L'EFFLEUREMENT ET AU GLISSEMENT

(30) Priority: 13.12.2005 KR 20050122566; 27.11.2006 KR 20060117814
(43) Date of publication of application: 17.09.2008
(60) Divisional application: 13004519.8
(73) Proprietor: Samsung Electronics Co., Ltd., Suwon-si, Gyeonggi-do, 443-742 (KR)
(72) Inventor: LEE, Hyun-Jeong, Yongin-si, Gyeonggi-do 449-712 (KR); SOH, Byung-Seok, Yongin-si, Gyeonggi-do 449-712 (KR); PARK, Joon-Ah, Yongin-si, Gyeonggi-do 449-712 (KR)
(74) Representative: Grünecker Patent- und Rechtsanwälte PartG mbB
(86) International application number: PCT/KR2006/005276
(87) International publication number: WO 2007/069835

(56) References cited:
- EP-A1- 1 403 617
- WO-A2-03/058373
- US-A- 5 715 413
- US-A- 5 760 773
- US-A1- 2003 013 483
- US-A1- 2004 021 643
- US-A1- 2005 190 147

## Description

### Technical Field

The present invention relates to a mobile device that can be controlled using a touch and drag operation and an operating method of the mobile device, and more particularly, to a mobile device that can be controlled using a touch and drag operation and an operating method of the mobile device, in which a function corresponding to a menu icon can be executed in an execution zone when a user selects the menu icon and drags the menu icon into the execution zone.

### Background Art

Recently, content providing servers which provide various data streams such as moving image programs in real time via the Internet or mobile networks have been commercialized.

Personal computers (PCs) connected to the Internet, mobile phones connected to a mobile network, personal digital assistants (PDAs) connected to an access point, and portable media players (PMPs) can receive data streams from such content providing servers in real time and process the received data streams, thereby enabling users to view various moving picture programs via networks.

In particular, PMPs, which are portable devices capable of reproducing a variety of multimedia files (e.g., video, music, and photo files) ranging from MP3 music files to still image/moving image content, can be equipped with various additional functions and can be designed based on an embedded system comprising a central processing unit (CPU), memories, auxiliary memories, and peripheral devices. Thus, PMPs can perform multiple tasks at the same time.

In addition , keyboard-equipped electronic dictionaries that can be converted into portable MP3 players (can perform the functions of portable MP3 players and Operating System (OS)-based PDAs that are capable of reproducing various multimedia files and provide a dictionary function have been commercialized.
However, when multiple tasks are performed using a PMP, a plurality of switches respectively corresponding to the multiple tasks must be manipulated independently and frequently. When a PMP is equipped with a touch screen or a touch sensor, a user may mistakenly turn on a switch that executes a function, thereby causing the PMP to malfunction.

US 2004/0021643 A1 relates to a display unit with touch panel. A touch-driven member, such as a functional button, is moved to a desired position, through a touch operation. In a fourth specific example, objects included in an object display region and a function setting region are referred to. An icon (object) display region is for displaying icons indicative of a variety of items. Functions associated with items can be activated and are set in a function-setting region. The function setting region is for indicating a menu of modes for activating functions such as "purchase", "listen for trial", "display comments", and the like when the items are, for example, music contents.

It is the object of the present invention to provide an improve device and operating method for function execution using a touch interface operation.

This object is solved by the subject matter of the independent claims.

Preferred embodiments are defined in the dependent claims.

Aspects of the present invention provide a mobile device that can be controlled using a touch and drag operation and an operating method thereof in which a function corresponding to a menu icon can be executed in an execution zone when a user selects the menu icon and drags the menu icon into the execution zone.

More specifically, aspects of the present invention provide a mobile device that can be controlled using a touch and drag operation and an operating method thereof in which a plurality of functions can be executed when a plurality of icons are selected and then respective corresponding touch positions are shifted

According to an aspect of the present invention, there is provided a mobile device that can be controlled using a touch and drag operation. The mobile device includes a sensing module which senses movement of an object from a first zone to a second zone, a function execution module which executes a function according to the sensed movement, and a display module which displays information regarding the function.

According to another aspect of the present invention, there is provided an operating method of a mobile device that can be controlled using a touch and drag operation. The operating method includes sensing movement of an object from a first zone to a second zone, executing a function according to the sensed movement, and displaying information regarding the function.

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings denote like elements, and thus their description will be omitted.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

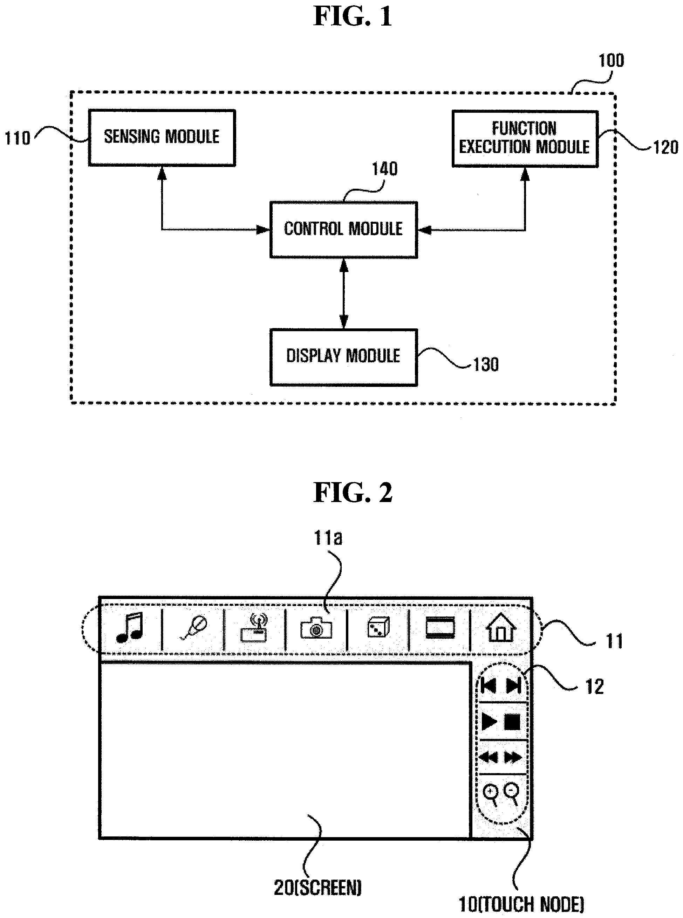

FIG. 1 is a block diagram of a mobile device 100 that can be controlled using a touch and drag operation according to an exemplary embodiment of the present invention. Referring to FIG. 1, the mobile device 100 includes a sensing module 110 which senses the movement of an object from a first zone to a second zone, a function execution module 120 which executes a function according to the movement of the object, a display module 130 which displays information regarding the function executed by the function execution module 120, and a control module 140 which controls the sensing module 110, the function execution module 120, and the display module 130.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The mobile device 100 may be a personal digital assistant (PDA), a portable media player (PMP), a play station portable (PSP), and an MP3 player, and a mobile phone that provides a touch and drag function.

The sensing module 110 senses the movement of an object from a first zone to a second zone.

The first zone may include a place where the movement of the object begins, and the second zone may include a place where the movement of the object ends. The object may be a finger of a user or a stylus pen that can be used on a touch screen instead of a finger of the user.

The sensing module 110 senses the beginning and ending of the movement of a finger of the user or a stylus pen on a touch screen.

For convenience of description, it will now be assumed that the user manipulates the mobile device 100 with his/her finger.

According to the present exemplary embodiment, the first zone may be a place where a plurality of menu icons that can be manipulated by the user are displayed, and may be a place where the movement of one of the menu icons selected by the user by a drag operation begins.

The second zone may include a place where information regarding a function corresponding to a menu icon selected from the first zone by the user is displayed, and may include a place where the movement of the selected menu icon by a drag operation ends.

The execution of a function corresponding to a menu icon may be interpreted as implying both the initiation and termination of a function corresponding to a menu icon.

The first zone may not necessarily display a plurality of menu icons that can be manipulated by the user are displayed, and the second zone may not necessarily display information regarding a function corresponding to one of the menu icons selected by the user.

According to the present exemplary embodiment, the first zone can be distinguished from the second zone in terms of where the movement of a finger (hereinafter referred to as the touching finger) of the user that touches the display module 130 begins and ends.

In order to terminate a function (hereinafter referred to as the current function) currently being executed by the mobile device 100, the user may drag a predetermined menu icon back into a place where the predetermined menu icon is previously located along with other menu icons, i.e., the first zone, from a place where information regarding the current function is displayed, i.e., the second zone. In this case, the movement of the touching finger begins in the second zone and ends in the first zone.

The distinction between the first zone and the second zone is not restricted to that set forth herein. For convenience, a place where a plurality of menu icons that can be manipulated by the user are displayed will hereinafter be referred to as the first zone, and a place where information regarding a function corresponding to one of the menu icons selected by the user is displayed will hereinafter be referred to as the second zone.

When the user selects one of a plurality of menu icons 11 displayed in the first zone, the sensing module 110 determines whether the touching finger touches the selected menu icon 11. For this, the sensing module 110 may receive a signal generated by one or more touch sensors.

Also, the sensing module 110 determines the position (hereinafter referred to as the touch position) of the touching finger and whether the touch position has been shifted.

The touch position is shifted when the user selects one of the menu icons 11 displayed in the first zone and then drags the selected menu icon 11 into the second zone.

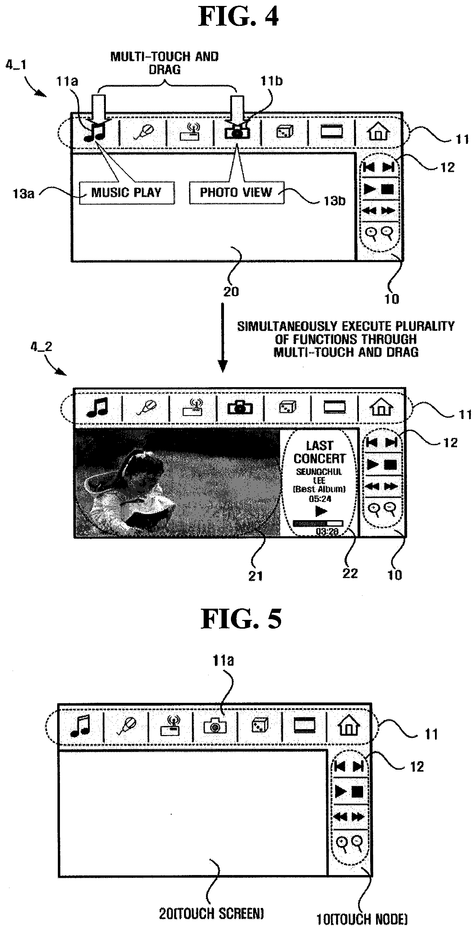

The determination of whether the touch position has been shifted will be described later in detail with reference to FIG. 4.

The sensing module 110 may determine whether the user has selected more than one menu icon 11 by determining one of the duration (hereinafter referred to as the touch duration) for and the speed (hereinafter referred to as the touch speed) at which the touching finger touches the first zone and the distance (hereinafter referred to as the touch distance) by which the touching finger travels after touching the first zone.

If the sensing module 110 determines that the user has selected more than one menu icon 11, the function execution module 120 may simultaneously execute a plurality of functions respectively corresponding to the selected menu icons 11.

If the sensing module 110 determines that the touching finger is currently placed on one of the menu icons 11, the sensing module 110 provides the function execution module 120 with information regarding a menu icon 110 corresponding to the touch position determined by the sensing module 110. Thereafter, if the sensing module 110 determines that the touch position has been shifted from the first zone to the second zone, the sensing module 110 executes a function corresponding to the menu icon 110 corresponding to the touch position determined by the sensing module 110.

In detail, when the user touches the first zone with the touching finger, the sensing module 110 determines a touch position, and provides the function execution module 120 with information regarding a menu icon 11 corresponding to the touch position. Thereafter, if the touch position is determined to have been shifted from the first zone to the second zone, the function execution module 120 executes a function corresponding to the menu icon 11 corresponding to the determined touch position.

Information regarding a menu icon 11 is a description of the menu icon 11. Information regarding a menu icon 11 may be useful when the menu icon 11 is not sufficient to indicate a function corresponding to the menu icon 11 or when the menu icon 11 is hidden from view by the touching finger.

The function execution module 120 may control a function currently being executed according to information provided by the sensing module 110 regarding the touch duration, the touch speed, and the touch distance.

The display module 130 displays information regarding a function that is executed in connection with one of the menu icons 11 selected by the user. The display module 130 may include at least one of the first zone and the second zone.

If the selected menu icon 11 is a menu icon 'Moving Picture', a moving picture may be displayed on a screen as information regarding a function corresponding to the selected menu icon 11. If the selected menu icon 11 is a menu icon 'Photo', an image may be displayed on the screen as the information regarding the function corresponding to the selected menu icon 11.

If the selected menu icon 11 is a menu icon 'Music', an icon displaying a music play state (e.g., an icon indicating whether a music file is currently being played, whether the playback of the music file is temporarily stopped, whether the music file is put on fast forward) and text data indicating a list of music files to be played may be included in the information regarding the function corresponding to the selected menu icon 11.

The control module 140 controls the operations of the sensing module 110, the function execution module 120, and the display module 130. The control module 140 is provided with the result of determination performed by the sensing module 110, determines whether to execute a predetermined command , and gives instructions to the function execution module 120 to execute the predetermined command, and gives instructions to the display module 130 to change the screen.

FIGS. 2 through 4 are diagrams for illustrating a display module included in a mobile device that can be controlled using a touch and drag operation according to an exemplary embodiment of the present invention (an example of the display module 130).

Referring to FIG. 2, the mobile device (the display module 130) includes a first zone 10 which is inversed L-shaped and displays a plurality of menu icons 11 and a plurality of sub-menu icons 12 that can be manipulated by a user, and a second zone 20 which displays information regarding a function that is executed in connection with one of the menu icons 11 or the sub-menu icons 12 selected by the user.

The user selects a predetermined menu icon 11 from among the menu icons 11 that are displayed in the first zone 10, and drags the selected menu icon 11 downward (i.e., in a direction from the first zone 10 to the second zone 20).

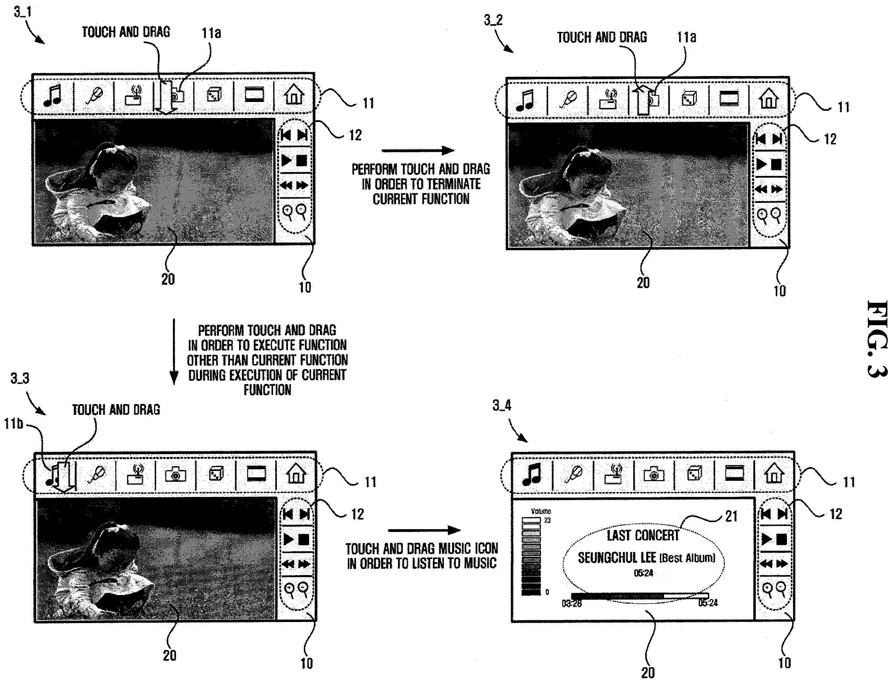

For example, referring to FIG. 3_1, when the user selects a photo icon 11a in the first zone 10 and drags the photo icon 11a downward, an image is displayed in the second zone 20. The user may control an image currently being displayed in the second zone 20 or view an image previous or subsequent to the image currently being displayed in the second zone 20 by manipulating the sub-menu icons 12

Referring to FIG. 3_2, in order to terminate a function currently being executed, e.g., a photo view function, the user may select the photo icon 11a and then drag the photo icon 11 upward (i.e., in a direction from the second zone 20 to the first zone 10).

In order to execute a function other than a current function during the execution of the current function, the user may select a menu icon 11 other than a menu icon 11 corresponding to the current function so that the current function can be readily replaced with a function corresponding to the selected menu icon 11.

For example, referring to FIG. 3_3, in order to listen to music in the middle of viewing images, the user may select a music icon 11b and drag the music icon 11b toward the second zone 20. Then, information 21 regarding a function (i.e., a music play function) that is executed in connection with the music icon 1 la is displayed in the second zone 20, as illustrated in FIG. 3_4. The user may control the music play function using the sub-menu icons 12. For example, the user may temporarily stop the playback of a current music file or play a music file subsequent to the current music file using the sub-menu icons 12.

In addition, the user may simultaneously execute a plurality of functions respectively corresponding to a plurality of menu icons 11. In this case, a plurality of pieces of information respectively corresponding to the menu icons 11 may be displayed in the second zone 20.

For example, referring to FIG. 4, when the user selects both of the music icon 11a and the photo icon 11b, information 13a regarding the music icon 11a and information 13b regarding the photo icon 11b is displayed in the second zone 20. Then, if the user drags both of the music icon 11a and the photo icon 11b in the direction from the first zone 10 to the second zone 20, functions respectively corresponding to the music icon 11a and the photo icon 11b are executed, and information regarding the music play function and information regarding the photo view function, e.g., music play state information 22 and an image 21, are displayed in the second zone 20.

If there exist n commands in association with a predetermined function, information regarding each function may be displayed occupying 1/n of the area of the second zone 20. The user may adjust the proportion of the area occupied by the information regarding each function to the area of the second zone 20 using a function of the mobile device 100 such as configuration.

For example, referring to FIG. 4, when a music player and a photo viewer are executed at the same time, the mobile device 100 can be set such that information regarding a function of the photo viewer can occupy 2/3 of the area of the second zone 20 when being displayed in the second zone 20.

FIGS. 5 through 8 are diagrams for illustrating a display module included in a mobile device that can be controlled using a touch and drag operation according to another exemplary embodiment of the present invention (another example of the display module 130 illustrated in FIG. 1). The operation of each module of the mobile device will hereinafter be described in detail with reference to FIG. 1.

The mobile device (the display module 130) includes a first zone 10 which is an inversed L-shaped and displays a plurality of menu icons 11 that can be manipulated by a user, and a second zone 20 which displays information regarding a function that is executed in connection with a menu icon 11 when a touch position is shifted to a predetermined area when the menu icon 11 is selected).

Here, a shift in the touch position indicates the movement of the touching finger from the first zone 10 to the second zone 20.

The first zone 10 includes a plurality of touch sensors. The touch sensors determine whether the user touches and selects any of the menu icons 11. In detail, the touch sensors may determine the direction of a touch and drag operation performed by the user and determine whether the user selects more than one menu icon 11.

The touch sensors may be force sensors or capacitive sensors (e.g., ESSD's SS01, Quantum's QTouch, and ALPS' GlideSensor).

The second zone 20, i.e., a display module 130, may be realized as a touch screen and recognize a touch and drag operation performed by the user. Here, the touch screen may be a four-wire or five-wire resistive touch screen, a Near Field Imaging (NFI) capacitive touch screen, or a surface wave sensory touch screen using infrared rays (IR) and ultrasound waves.

Referring to FIG. 1, the sensing module 110 determines the location of one of the menu icons 11 selected by the user with the aid of one or more touch sensors included in the first zone 10. If the user drags the selected menu icon 11 into the second zone 20, the touch sensors or a touch screen may determine the direction (hereinafter referred to as the drag direction) in which the selected menu icon 11 is dragged and the position (hereinafter referred to as the drag position) to which the selected menu icon 11 is dragged.

If the touch position has been shifted to the second zone 20 as a result of the movement of the selected menu icon 11, the sensing module 110 provides the function execution module 120 with information regarding a menu icon 11 corresponding to the touch position (information regarding the selected menu icon 11). Then, the function execution module 120 executes a function corresponding to the selected menu icon 11.

Thereafter, if the user selects one of the menu icons 11 displayed in the first zone 10 and then shifts a touch position by dragging the selected menu icon 11 into the second zone 20, a function corresponding to the selected menu icon 11 is executed, and information regarding the function is displayed in the second zone 20.

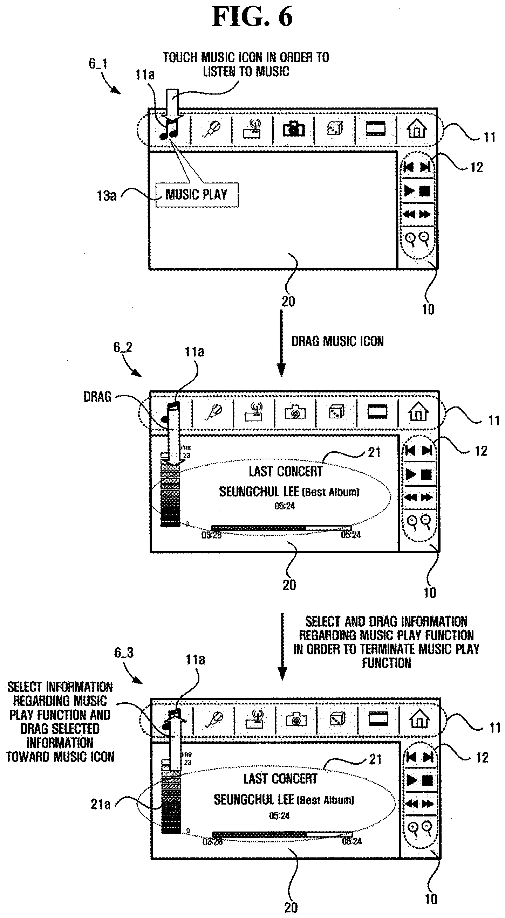

For example, referring to FIG. 6_1, when the user selects a music icon 11a from a plurality of menu icons 11 displayed in a first zone 10, information 13a indicating that a function corresponding to the music icon 11a is a music play function is displayed in the second zone 20.

Thereafter, referring to FIG. 6_2, if the user shifts a touch position from the music icon 11a to the second zone 20, the music play function is executed, and information 21 regarding the music play function is displayed in the second zone 20.

Thereafter, the user may control the music play function using a plurality of sub-menu icons 12 displayed in the first zone 10. For example, the user may temporarily stop the playback of a current music file or play a music file subsequent to the current music file.

Referring to FIG. 6_3, the user may terminate a function currently being executed, i.e., the music play function, by selecting a piece of information 21a from the information 21 regarding the music play function, and dragging the selected piece of information 21a into the first zone 10.

In order to execute a predetermined function during the execution of a current function, the user may select a menu icon 11 corresponding to the predetermined function and drag the selected menu icon 11 into the second zone 20 so that the current function can be readily replaced with the predetermined function.

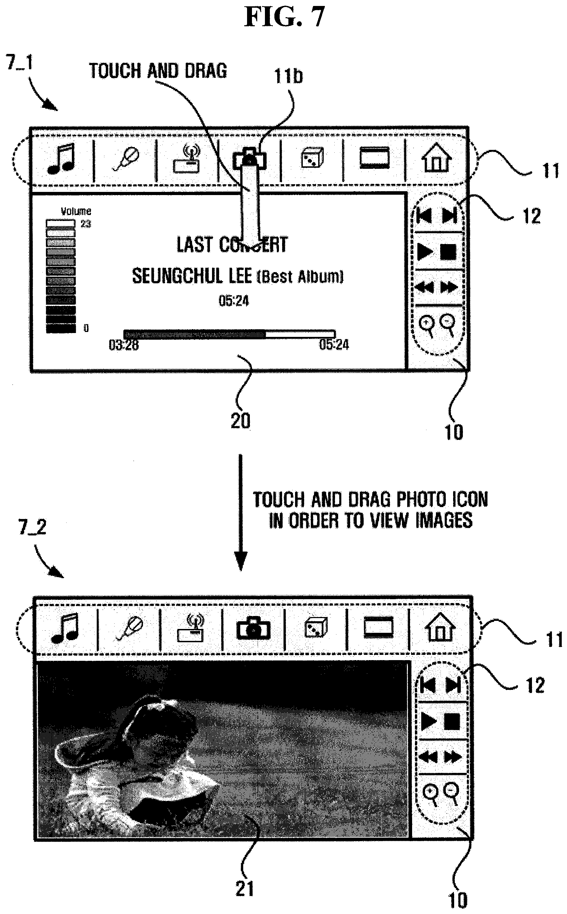

For example, referring to FIG. 7_1, in order to view images in the middle of listening to music, the user may select a photo icon 11b and drag the photo icon 11b into the second zone 20. Then, information indicating that a photo view function is currently being executed, i.e., an image 21, is displayed in the second zone 20. The user may control the image 21 using a plurality of sub-menu icons 12 displayed in the first zone 10. For example, the user may enlarge or reduce the image 21 or view an image subsequent to the image 21 using the sub-menu icons 12.

If the user selects more than one menu icon 11 at the same time, the function execution module 120 may be provided with information regarding each of the selected menu icons 11 by the sensing module 110, and control the display module 130 to display the information in the second zone 20.

Thereafter, if the user drags the selected menu icons 11 into the second zone 20 at the same time, the function execution module 120 may simultaneously execute a plurality of functions respectively corresponding to the selected menu icons 11, and the display module 130 may simultaneously display a plurality of pieces of information respectively corresponding to the functions in the second zone 20.

If there exist n functions, the display module 130 may display information regarding each of the n functions in the second zone 20 so that information regarding each of the n functions can occupy 1/n of the area of the second zone 20.

The user may adjust the area occupied by information regarding each function when the information is displayed in the second zone 20. In detail, the user may select one of a plurality of pieces of information respectively corresponding to a plurality of functions and scroll the selected piece of information, thereby increasing or reducing the area occupied by the selected piece of information when the selected piece of information is displayed in the second zone 20.

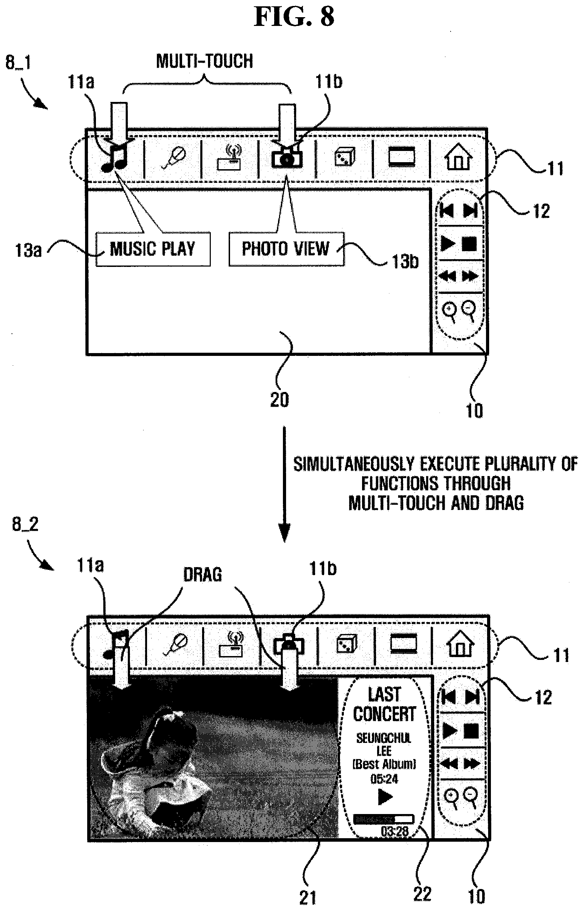

For example, referring to FIG. 8_1, when the user selects the music icon 11a and the photo icon 11b at the same time, information 13a indicating that a function corresponding to the music icon 11a is a music play function and information 13b indicating that a function corresponding to the photo icon 11b is a photo view function is displayed in the second zone 20.

Thereafter, referring to FIG. 8_2, if touch positions associated with the selection of the music icon 11a and the photo icon 11b are shifted to the second zone 20, the music play function and the photo view function are simultaneously executed, and information regarding the music play function and the photo view function, e.g., an image 2 and music play state information 22, are displayed in the second zone 20.

In order to terminate one of a plurality of functions currently being executed, the user may select one of a plurality of pieces of information respectively corresponding to the functions and drag the selected piece of information into the first zone 10.

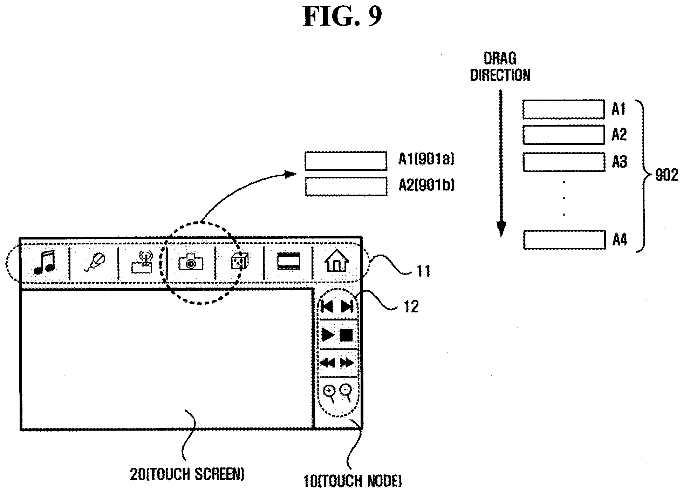

FIG. 9 is a diagram for explaining the determination of whether a touch and drag operation has been performed in a mobile device that can be controlled using a touch and drag operation according to an exemplary embodiment of the present invention (the mobile device 100 illustrated in FIG. 1, according to an exemplary embodiment of the present invention). Referring to FIG. 9, a first zone 10 includes a plurality of touch sensors(901a, 901b). When a user selects one of a plurality of menu icons 11 displayed in the first zone 10 and drags the selected menu icon 11 into a second zone 20, the touch sensors(901a, 901b) are being sequentially touched, for example, in the order of A1 and A2, by the user.

According to the present exemplary embodiment, the touch sensors(901a, 901b) are arrayed so that two touch sensors 901a (A1) and 901b (A2) can be allocated to each column. However, the touch sensors 15 may be arrayed so that more than two touch sensors (e.g., touch sensors 902 (A1 through A4)) can be allocated to each column.

The sensing module 110 senses that a touch position of a touching finger of the user is currently located in the second zone 20 (i.e., a touch screen).

Then, the sensing module 110 determines whether the touch position has been shifted based on the order in which the touch sensors 15 are being touched by the user (e.g., the order of A1 and A2) and the current location of the touch position.

The sensing module 110 can determine whether the user wishes to execute or terminate a function corresponding to one of the menu icons 11 displayed in the first zone 10 according to whether the touch position has been shifted.

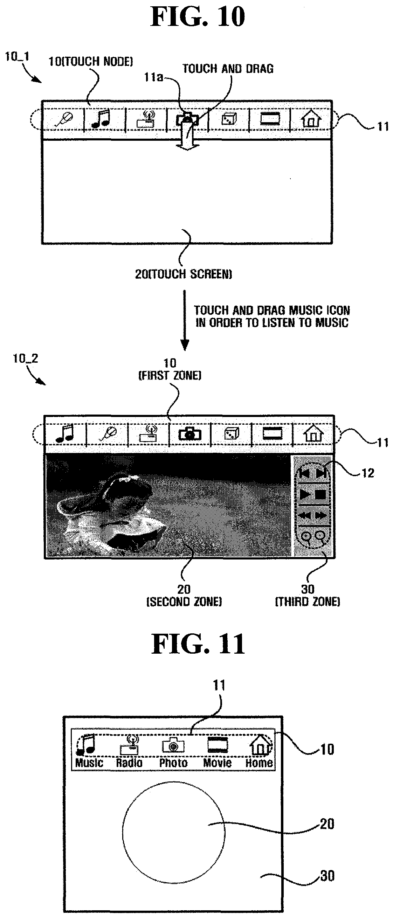

FIG. 10 is a diagram for illustrating a display module included in a mobile device that can be controlled using a touch and drag operation according to another exemplary embodiment of the present invention (another example of the display module 130 illustrated in FIG. 1). Referring to FIG. 10_2, the mobile device includes multiple sensor nodes (not shown), a first zone 10 which displays a plurality of menu icons 11 that can be manipulated by a user, a second zone 20 which displays information regarding a function that is executed in connection with one of the menu icons 11 selected by the user, and a third zone 30 which displays a plurality of sub-menu icons 12 that are used to control the information displayed in the second zone 20.

The second zone 20, the third zone 230, and the display module 130 may be integrated into one body, and the touch module 130 may be realized as a touch screen.

The display module 130 may not be initially divided into the second zone and the third zone 30.

In detail, referring to FIG. 10_1, when the user selects a photo icon 11a from among the menu icons 11 displayed in the first zone 10 and shifts a touch position by dragging the photo icon 11a to the second zone 20, the third zone 30 is formed in the second zone 20 so that the third zone 30 can be distinguished from the second zone 20.

The third zone 30 displays a plurality of sub-menu icons 12 of a menu icon 11 selected from the first zone 10 by the user. The sub-menu icons 12 control information displayed in the second zone 20 regarding a function that is executed in connection with the selected menu icon 11.

The display module 130 illustrated in FIG. 10 is different from the display module 130 illustrated in FIGS. 5 through 8 by including the third zone 30 in that the display module 130 illustrated in FIG. 10 includes the third zone 30 and thus displays a plurality of sub-menu icons 12 in the third zone when the user selects one of the menu icons 11 displayed in the first zone and shifts a touch position by dragging the selected menu icon 11 into the second zone 20, whereas the display module 130 illustrated in FIGS. 5 through 8 displays a plurality of sub-menu icons 12 in the first zone 10 from the beginning.

An operating method of the display module 130 illustrated in FIGS. 10_1 and 10 2 when the user selects more than one menu icon 11 from the first zone 10 and thus more than one function is executed at the same time, when the user wishes to perform a function other than a current function during the execution of the current function, or when the user terminates the current function is the same as in the exemplary embodiment described above with reference to FIGS. 5 through 8.

FIGS. 11 through 13 are diagrams for illustrating a display module included in a mobile device that can be controlled using a touch and drag operation according to another exemplary embodiment of the present invention (another example of the display module 130 illustrated in FIG. 1). Referring to FIG. 11, the mobile device (the display module 130) includes a first zone 10 which displays a plurality of menu icons 11 that can be manipulated by a user, a second zone 20 which displays information regarding a function that is executed in connection with one of the menu icons 11 selected by the user, and a third zone 30 which displays a plurality of sub-menu icons 12 that are used to control the information displayed in the second zone 20.

Referring to FIG. 11, the first zone 10, the second zone 20, the third zone 30, and the display module 130 are integrated into one body, and the display module 130 is realized as a touch screen.

Information regarding each of the menu icons 11 displayed in the first zone may be displayed along with the corresponding menu icon 11. Alternatively, information regarding each of the menu icons 11 may be displayed in the second zone 20 when the corresponding menu icon 11 is selected by the user, as described above with reference to FIG. 8.

Referring to FIGS. 11 through 13, information regarding each of the menu icons 11 is displayed along with the corresponding menu icon 11 from the beginning.

When the user selects one of the menu icons 11 displayed in the first zone 10 and shifts a touch position by dragging the selected menu icon 11 into the second zone 20, a function corresponding to the selected menu icon 11 is executed, and information regarding the function is displayed in the second zone 20.

Then, a plurality of sub-menu icons 12 that control the information displayed in the second zone 20 are displayed in the third zone 30. Thus, the user can control the information displayed in the second zone 20 using the sub-menu icons 12 displayed in the third zone 30.

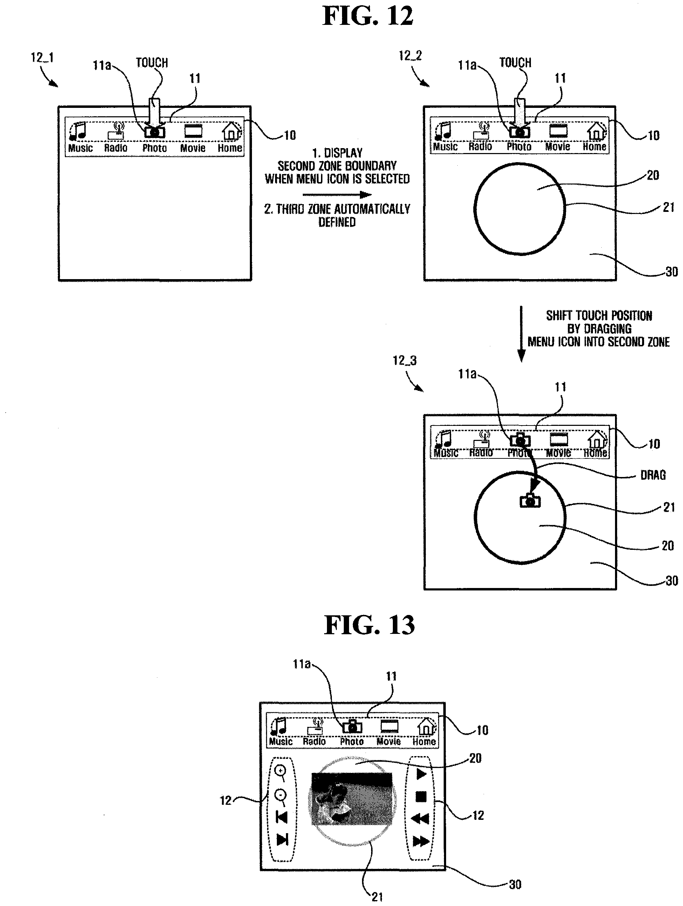

Referring to FIGS. 12 and 13, information regarding a function that is executed in connection with one of the menu icons 11 selected by the user is displayed in the second zone 20, and a plurality of sub-menu icons 12 that are used to control the information displayed in the second zone 20 are displayed in the third zone 30.

For example, referring to FIGS. 12_1 and 12_2, when the user selects a photo icon 11a displayed in the first zone 10, the display module 130 displays a second zone boundary 21.

Once the second zone boundary 21 is displayed, the first zone 10, the second zone 20 and the third zone 30 are automatically defined and are clearly distinguished from each other. Accordingly, it is possible to provide the user with information indicating where to begin and end dragging the photo icon 11a.

Thereafter, the user shifts a touch position to the inside the second zone boundary 21, i.e., shifts the touch position to the second zone 20, by dragging the photo icon 11a.

Referring to FIG. 12_3, the display module 130 feeds back the photo icon 11a to the user, thereby enabling the user to easily determine which of the menu icons 11 is currently being selected and providing the user with intuition so that the user can easily move the menu icon 11 currently being selected, i.e., the photo icon 11a, to the inside of the second zone boundary 21.

Once the user shifts the touch position to the second zone 20 by dragging the photo icon 11a, the display module 130 makes the second zone boundary 21 disappear and displays an image in the second zone 20 as information regarding a function that is executed in connection with the photo icon 11a.

The image displayed in the second zone 20 may be stored in a storage module of the mobile device 100 or may be received from an external device.

Thereafter, the display module 130 displays a plurality of sub-menu icons 12 that control the image displayed in the second zone 20 in the third zone 30.

In detail, the user may select one of the sub-menu icons 12 and drag the selected sub-menu icon 12 into the second zone 20, thereby performing various operations such as enlarging or reducing a current image, opening up an image file folder, and viewing an image previous or subsequent to the current image.

An operating method of the display module 130 illustrated in FIGS. 11 through 13 when the user selects more than one menu icon 11 from the first zone 10 and thus more than one function is executed at the same time, when the user wishes to execute a function other than a current function during the execution of the current function or when the user terminates the current function is the same as in the exemplary embodiment described above with reference to FIGS. 5 through 8.

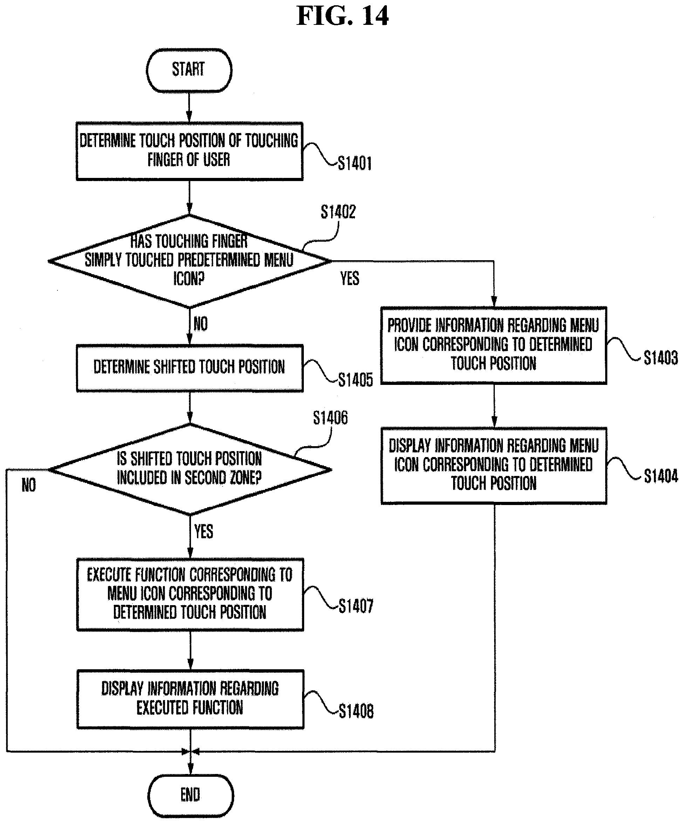

FIG. 14 is a flowchart illustrating an operating method of a mobile device that can be controlled using a touch and drag operation, according to an exemplary embodiment of the present invention. The operating method illustrated in FIG. 14 involves executing a function corresponding to a menu icon 11 selected and dragged by a user. For convenience, the operating method illustrated in FIG. 14 will hereinafter be described in detail with reference to FIG. 1.

Referring to FIG. 14, in operation S1401, the sensing module 110 determines a touch position of a touching finger of a user when a predetermined menu icon 10 displayed in the first zone 10 is selected (S1401).

In operation S1402, the sensing module 110 determines whether the touching finger has simply touched the predetermined menu icon 11 or has touched and dragged the predetermined menu icon 11, i.e., determines whether the touching finger has simply touched the predetermined menu icon 11 or not.

For example, when the user drags the predetermined menu icon 11, the sensing module 110 senses that a plurality of touch sensors 15 included in the first zone 10 have been sequentially touched, for example, in ascending order, by the touching finger and that the touching finger is currently located in a predetermined function execution zone, i.e., the second zone 20. Then, the sensing module 110 recognizes that the user has performed a drag operation.

In operation S1403, if it is determined in operation S1402 that the touching finger has simply touched the predetermined menu icon 11 so that the predetermined menu icon 11 can be selected, the sensing module 110 requests the function execution module 120 to display information regarding the predetermined menu icon 11 in the second zone 20.

In operation S1404, the function execution module 120 controls the display module 130 to display the information regarding the predetermined menu icon 11 (e.g., information indicating that the predetermined menu icon 11 is related to a music player) in the second zone 20.

In operation S1405, if it is determined in operation S1402 that the touching finger has not simply touched the predetermined menu icon 11 but has shifted the touch position, the sensing module 110 determines the shifted touch position based on a touch sensing signal transmitted thereto, and determines whether the shifted touch position is included in the second zone 20.

In operation S1407, if it is determined in operation S1406 that the shifted touch position is included in the second zone 20, the function execution module 120 executes a function corresponding to the predetermined menu icon 11.

In operation S1408, the display module 130 displays information regarding the function corresponding to the predetermined menu icon 11 in the second zone 20.

When the user selects and then drags the predetermined menu icon 11, the sensing module 110 senses a shift in the touch position and determines that the predetermined menu icon 11 has been dragged by the user. Then, the function execution module 120 readily executes a function corresponding to the predetermined menu icon 11 without providing information regarding the predetermined menu icon 11.

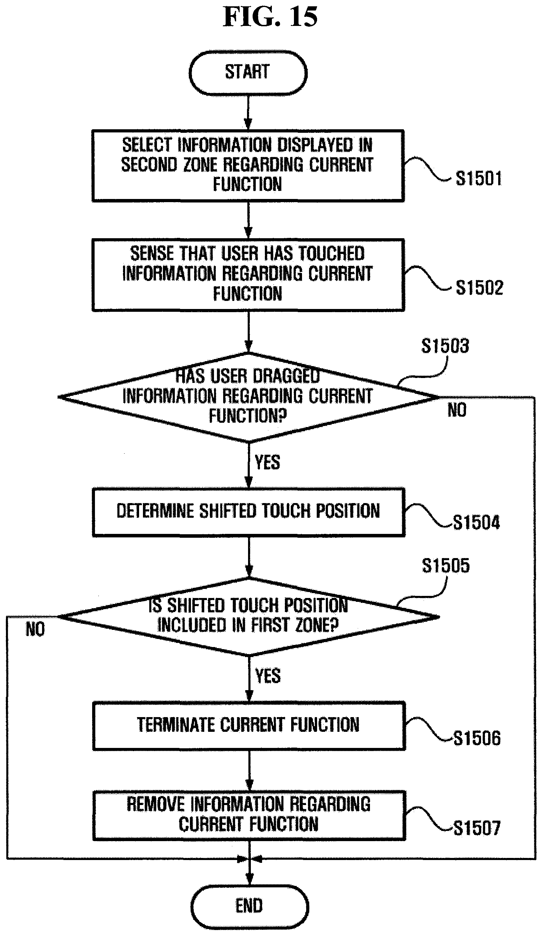

FIG. 15 is a flowchart illustrating a method of terminating a function currently being executed by a mobile device according to an exemplary embodiment of the present invention. For convenience, the method illustrated in FIG. 15 will hereinafter be described in detail with reference to FIG. 1.

Referring to FIG. 15, in operation S1501, a user selects information displayed in a function execution zone (i.e., the second zone 20) regarding a current function from a function execution zone, in order to terminate the current function.

In operation S1502, the sensing module 110 senses that the user has touched and selected the information regarding the current function.

In operation S1503, the sensing module 110 determines whether the user has dragged the information regarding the current function into the first zone 10. In operation S1504, if it is determined in operation S1502 that the user has dragged the information regarding the current function into the first zone, the sensing module 110 senses that a plurality of touch sensors 15 included in the first zone 10 have been sequentially touched, for example, in descending order, by the user and determines that a touch position has been shifted.

In operation S1505, the sensing module 110 determines whether the shifted touch position is included in the first zone 10. If it is determined in operation S1505 that the shifted touch position is included in the first zone 10, the sensing module 110 determines that the user has requested termination of the current function.

Accordingly, in operation S1506, the function execution module 120 terminates the current function.

In operation S1507, the display module 130 removes the information regarding the current function from the second zone 20.

According to the present exemplary embodiment, the user can execute a function by selecting a menu icon corresponding to the function and dragging the selected menu icon into a predetermined function execution zone. Therefore, the user can intuitively use any desired functions using a simple convenient method.

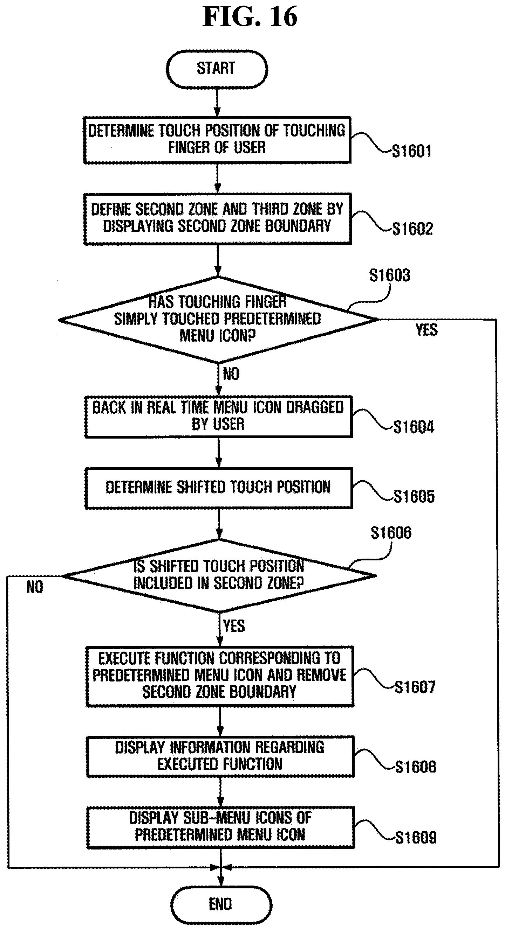

FIG. 16 is a flowchart illustrating an operating method of a mobile device that can be controlled using a touch and drag operation, according to another exemplary embodiment of the present invention. For convenience, the operating method illustrated in FIG. 16 will hereinafter be described in detail with reference to FIGS. 1 and 11 through 13.

A mobile device to which the operating method illustrated in FIG. 16 is applied includes a first zone 10, a second zone 20, a third zone 30, and a display module 130 which are all integrated into one body. The display module 130 is realized as a touch screen. The first zone 10 displays one or more menu icons 11 together with information regarding each of the menu icons 11.

Referring to FIG. 16, in operation S1601, the sensing module 110 determines a touch position of a touching finger of a user when a predetermined menu icon 11 displayed in the first zone 10 is selected.

In operation S1602, the display module 130 displays a second zone boundary 21 so that the second zone 20 and the third zone 30 can be defined.

In operation S1603, the sensing module 110 determines whether the touching finger has simply touched the predetermined menu icon 11 or has touched and dragged the predetermined menu icon 11, i.e., determines whether the touching finger has simply touched the predetermined menu icon 11 or not.

In operation S1604, if it is determined in operation S1603 that the touching finger has not simply touched the predetermined menu icon 11 but has touched and then dragged the predetermined menu icon 11, the display module 130 feeds back the predetermined menu icon 11 to the user in real time.

In operation S1605, the sensing module 110 senses that the touch position has been shifted and determines the shifted touch position based on a touch sensing signal transmitted thereto. In operation S1606, the sensing module 110 determines whether the shifted touch position is included in the second zone 20.

In operation S1607, if it is determined in operation S1606 that the shifted touch position is included in the second zone 20, the function execution module 120 executes a function corresponding to the predetermined menu icon 11, and removes the second zone boundary 21.

In operation S1608, the display module 130 displays in the third zone 30 a plurality of sub-menu icons 12 that can control information regarding the function corresponding to the predetermined menu icon 11.

The user may control the information regarding the function corresponding to the predetermined menu icon 11 using the sub-menu icons 12 displayed in the third zone 30.

According to the present exemplary embodiment, the user may terminate a current function by selecting information regarding the current function from the second zone 20 and dragging the selected information into the first zone 10, and this is the same as described above with reference to FIG. 15.

### Brief Description of the Drawings

The above and other aspects and features of the present invention will become more apparent by describing in detail exemplary embodiments thereof with reference to the attached drawings, in which:
FIG. 1 is a block diagram of a mobile device that can be controlled using a touch and drag operation according to an exemplary embodiment of the present invention;
FIGS. 2 and 4 are diagrams for illustrating a display module included in a mobile device that can be controlled using a touch and drag operation according to an exemplary embodiment of the present invention (an example of a display module illustrated in FIG. 1);
FIGS. 5 through 8 are diagrams for illustrating a display module included in a mobile device that can be controlled using a touch and drag operation according to another exemplary embodiment of the present invention (another example of the display module illustrated in FIG. 1);
FIG. 9 is a diagram for explaining the determination of whether a touch and drag operation has been performed in a mobile device that can be controlled using a touch and drag operation according to an exemplary embodiment of the present invention (the mobile device illustrated in FIG. 1, according to an exemplary embodiment of the present invention);
FIG. 10 is a diagram for illustrating a display module included in a mobile device that can be controlled using a touch and drag operation according to another exemplary embodiment of the present invention (another example of the display module illustrated in FIG. 1);
FIGS. 11 through 13 are diagrams for illustrating a display module included in a mobile device that can be controlled using a touch and drag operation according to another exemplary embodiment of the present invention (another example of the display module illustrated in FIG. 1);
FIG. 14 is a flowchart illustrating an operating method of a mobile device that can be controlled using a touch and drag operation, according to an exemplary embodiment of the present invention;
FIG. 15 is a flowchart illustrating a method of terminating a function currently being executed by a mobile device, according to an exemplary embodiment of the present invention; and
FIG. 16 is a flowchart illustrating an operating method of a mobile device that can be controlled using a touch and drag operation, according to another exemplary embodiment of the present invention.

### Industrial Applicability

As described above, the present invention has the following advantages.

According to the present invention, when a user selects a menu icon and then shifts a touch position to a function execution zone, a function corresponding to the selected menu icon is executed. Thus, the user can properly and precisely execute any desired functions using a simple method.

In addition, according to the present invention, when the user selects a plurality of menu icons and drags the selected menu icons into a predetermined zone at the same time, a plurality of functions respectively corresponding to the selected menu icons are simultaneously executed. Thus, frequent switch manipulations are not necessary.

Moreover, according to the present invention, a function corresponding to a menu icon cannot be executed by simply touching the menu icon. Thus, it is possible to prevent malfunction of a mobile device when the user mistakenly touches the mobile device.

## Claims

1. A mobile device (100) that can be controlled using a touch and drag operation, the mobile device comprising:
a sensing module (110) adapted to sense movement of an object from a first zone (10) displaying a plurality of menu icons (11) to a second zone (20);
a function execution module (120) adapted to execute a function according to the sensed movement wherein the function corresponds to a menu icon (11, 11a, 11b) selected from the first zone (10); and
a display module (130) adapted to display information regarding the function,
**characterized in that**
if the sensing module (110) senses movement of the object in connection with a plurality of menu icons, the function execution module is adapted to simultaneously execute a plurality of functions respectively corresponding to the menu icons selected at the same time from the first zone.

2. The mobile device of claim 1, wherein the display module comprises a third zone (30) which is adapted to display one or more sub-menu icons (12) of the menu icon (11a, 11b), the sub-menu icons (12) controlling the function.

3. The mobile device of claim 1, wherein the second zone (20) is included in the display module.

4. The mobile device of claim 1, wherein the first zone (10) comprises multiple sensor nodes.

5. The mobile device of claim 4, wherein the first zone is formed around the display module along a boundary of the mobile device (100).

6. The mobile device of claim 2, wherein the first zone (10), the second zone (20), and the third zone (30) are included into the display module and integrated into one body.

7. The mobile device of claim 1, wherein the display module is adapted to intermittently display a boundary (21) of the second zone (20) according to whether the menu icon (11, 11a, 11b) is selected.

8. The mobile device of claim 1, wherein the sensing module (110) is adapted to additionally sense one of touch duration, touch distance, and touch speed of the object.

9. The mobile device of claim 8, wherein the function execution module (120) is adapted to change the function according to one of the sensed touch duration, touch distance and touch speed.

10. An operating method of a mobile device that can be controlled using a touch and drag operation, the operating method comprising:
sensing (S1401-S1406) movement of an object from a first zone (10) displaying a plurality of menu icons (11) to a second zone (20);
executing (S1407) a function according to the sensed movement wherein the function corresponds to a menu icon (11, 11a, 11b) selected from the first zone (10); and
displaying (S1408) information regarding the function,
**characterized in that**
the executing comprises, if sensing movement of the object in connection with a plurality of menu icons, simultaneously executing a plurality of functions respectively corresponding to the menu icons selected at the same time from the first zone.

11. The operating method of claim 10,
wherein the sensing comprises additionally sensing one of touch duration, touch distance, and touch speed of the object.

## Patentansprüche

1. Mobiles Gerät (100), das unter Verwendung eines Berühr- und Ziehvorgangs gesteuert werden kann, wobei das mobile Gerät umfasst:
ein Sensormodul (110), das dazu eingerichtet ist, die Bewegung eines Objekts von einer ersten Zone (10), die eine Vielzahl von Menüsymbolen (11) anzeigt, zu einer zweiten Zone (20) zu erfassen;
ein Funktionsausführungsmodul (120), das dazu eingerichtet ist, eine Funktion gemäß der erfassten Bewegung auszuführen, wobei die Funktion einem Menüsymbol (11, 11a, 11b) entspricht, das aus der ersten Zone (10) ausgewählt ist; und
ein Anzeigemodul (130), das dazu eingerichtet ist, Informationen bezüglich der Funktion anzuzeigen, **dadurch gekennzeichnet, dass**,
wenn das Erfassungsmodul (110) die Bewegung des Objekts in Verbindung mit einer Vielzahl von Menüsymbolen erfasst, das Funktionsausführungsmodul dazu eingerichtet ist, gleichzeitig eine Vielzahl von Funktionen auszuführen, die jeweils den gleichzeitig aus der ersten Zone ausgewählten Menüsymbolen entsprechen.

2. Mobiles Gerät nach Anspruch 1, bei dem das Anzeigemodul eine dritte Zone (30) umfasst, die dazu eingerichtet ist, ein oder mehrere Untermenüsymbole (12) des Menüsymbols (11a, 11b) anzuzeigen, wobei die Untermenüsymbole (12) die Funktion steuern.

3. Mobiles Gerät nach Anspruch 1, bei dem die zweite Zone (20) in dem Anzeigemodul enthalten ist.

4. Mobiles Gerät nach Anspruch 1, bei dem die erste Zone (10) mehrere Sensorknoten umfasst.

5. Mobiles Gerät nach Anspruch 4, bei dem die erste Zone um das Anzeigemodul entlang einer Grenze des mobilen Geräts (100) ausgebildet ist.

6. Mobiles Gerät nach Anspruch 2, bei dem die erste Zone (10), die zweite Zone (20) und die dritte Zone (30) in dem Anzeigemodul enthalten und in einen Körper integriert sind.

7. Mobiles Gerät nach Anspruch 1, bei dem das Anzeigemodul dazu eingerichtet ist, eine Grenze (21) der zweiten Zone (20) abhängig davon, ob das Menüsymbol (11, 11a, 11b) ausgewählt ist, intermittierend anzuzeigen.

8. Mobiles Gerät nach Anspruch 1, bei dem das Erfassungsmodul (110) dazu eingerichtet ist, zusätzlich eine von Berührungsdauer, Berührungsdistanz und Berührungsgeschwindigkeit des Objekts zu erfassen.

9. Mobiles Gerät nach Anspruch 8, bei dem das Funktionsausführungsmodul (120) dazu eingerichtet ist, die Funktion gemäß einer der erfassten Berührungsdauer, Berührungsdistanz und Berührungsgeschwindigkeit zu ändern.

10. Betriebsverfahren eines mobilen Gerätes, das unter Verwendung einer Berühr- und Ziehbedienung gesteuert werden kann, wobei das Betriebsverfahren umfasst:
Erfassen (S1401-S1406) einer Bewegung eines Objekts von einer ersten Zone (10), die eine Mehrzahl von Menüsymbolen (11) anzeigt, zu einer zweiten Zone (20);
Ausführen (S1407) einer Funktion gemäß der erfassten Bewegung, wobei die Funktion einem Menüsymbol (11, 11a, 11b) entspricht, das aus der ersten Zone (10) ausgewählt ist; und
Anzeigen (S1408) von Informationen bezüglich der Funktion,
**dadurch gekennzeichnet, dass**
das Ausführen, wenn eine Bewegung des Objekts in Verbindung mit einer Vielzahl von Menüsymbolen erfasst wird, gleichzeitig das Ausführen einer Vielzahl von Funktionen umfasst, die jeweils den Menüsymbolen entsprechen, die gleichzeitig aus der ersten Zone ausgewählt werden.

11. Betriebsverfahren nach Anspruch 10,
bei dem das Erfassen umfasst, dass zusätzlich eine von Berührungsdauer, Berührungsdistanz und Berührungsgeschwindigkeit des Objekts erfasst wird.

## Revendications

1. Dispositif mobile (100) pouvant être commandé par effleurement et glissement, dispositif mobile comprenant:
un module de détection (110) conçu pour détecter le mouvement d'un objet à partir d'une première zone (10) affichant une pluralité d'icônes de menu (11) vers une deuxième zone (20);
un module d'exécution de fonction (120) conçu pour exécuter une fonction selon le mouvement détecté, la fonction correspondant à une icône de menu (11, 11a, 11b) sélectionnée dans la première zone (10); et
un module d'affichage (130) conçu pour afficher des informations concernant la fonction, **caractérisé en ce que**
si le module de détection (110) détecte le mouvement de l'objet en relation avec une pluralité d'icônes de menu, le module d'exécution de fonction est conçu pour exécuter simultanément une pluralité de fonctions correspondant respectivement aux icônes de menu sélectionnées en même temps dans la première zone.

2. Dispositif mobile selon la revendication 1, dans lequel le module d'affichage comprend une troisième zone (30) qui est conçu pour afficher une ou plusieurs icônes de sous-menu (12) de l'icône de menu (11a, 11b), les icônes sous-menu (12) commandant la fonction.

3. Dispositif mobile selon la revendication 1, dans lequel la deuxième zone (20) est incluse dans le module d'affichage.

4. Dispositif mobile selon la revendication 1, dans lequel la première zone (10) comprend plusieurs noeuds capteurs.

5. Dispositif mobile selon la revendication 4, dans lequel la première zone est formée autour du module d'affichage le long d'une limite du dispositif mobile (100).

6. Dispositif mobile selon la revendication 2, dans lequel la première zone (10), la deuxième zone (20) et la une troisième zone (30) sont incluses dans le module d'affichage et intégrées dans un corps.

7. Dispositif mobile selon la revendication 1, dans lequel le module d'affichage est conçu pour afficher de façon intermittente une limite (21) de la deuxième zone (20) selon que l'icône de menu (11, 11a, 11b) est sélectionnée ou non.

8. Dispositif mobile selon la revendication 1, dans lequel le module de détection (110) est conçu pour détecter un élément parmi la durée d'effleurement, la distance d'effleurement et la vitesse d'effleurement de l'objet.

9. Dispositif mobile selon la revendication 8, dans lequel le module d'exécution de fonction (120) est conçu pour changer la fonction selon un élément parmi la durée d'effleurement, la distance d'effleurement et la vitesse d'effleurement.

10. Procédé d'utilisation d'un appareil mobile qui peut être commandé par effleurement et glissement, le procédé d'utilisation consistant à:
détecter (S1401-S1406) le mouvement d'un objet à partir d'une première zone (10) affichant une pluralité d'icônes de menu (11) vers une deuxième zone (20);
exécuter une fonction (S1407) selon le mouvement détecté, la fonction correspondant à une icône de menu (11, 11a, 11b) sélectionnée dans la première zone (10); et
afficher (S1408)des informations concernant la fonction,
**caractérisé en ce que**
l'exécution comprend, en cas de détection du mouvement de l'objet en relation avec une pluralité d'icônes de menu, l'exécution simultanée d'une pluralité de fonctions correspondant respectivement aux icônes de menu sélectionnées en même temps dans la première zone.

11. Procédé d'utilisation de la revendication 10,
dans lequel la détection comprend en outre la détection d'un élément parmi la durée d'effleurement, la distance d'effleurement et la vitesse d'effleurement de l'objet.
